(19) Europäisches Patentamt
European Patent Office
Office européen des brevets

(11) **EP 1 640 220 B1**

(12) **EUROPEAN PATENT SPECIFICATION**

(45) Date of publication and mention
of the grant of the patent:
**13.06.2007 Bulletin 2007/24**

(51) Int Cl.:
***B60R 21/01*** *(2006.01)*

(21) Application number: **05108666.8**

(22) Date of filing: **20.09.2005**

(54) **Collision determining apparatus for a vehicle**

Vorrichtung zur Bestimmung eines Fahrzeugaufpralls

Dispositif de décision de collision pour véhicule

(84) Designated Contracting States:
**DE FR GB**

(30) Priority: **24.09.2004 JP 2004277697**

(43) Date of publication of application:
**29.03.2006 Bulletin 2006/13**

(73) Proprietor: **Keihin Corporation
Shinjuku-ku, Tokyo (JP)**

(72) Inventors:
• **Yuan, Fang,
Keihin Corp., Tochigi R&D Dev. Ctr.
Takanezawa-machi,Shioya-gun, Tochigi-ken (JP)**
• **Oosaki, Tatsuji
Keihin Corp.,Tochigi R&D Dev. Ctr.
Takanezawa-machi,Shioya-gun, Tochigi-ken (JP)**

(74) Representative: **Poulin, Gérard et al
BREVALEX
3, rue du Docteur Lancereaux
75008 Paris (FR)**

(56) References cited:
**EP-A- 0 430 813**          **DE-A1- 19 817 780**

**Description**

BACKGROUND OF THE INVENTION

Field of the Invention

The present invention relates to a collision determining apparatus for a vehicle that determines a vehicle collision, and causes an occupant protection apparatus such as, for example, an airbag apparatus or a seatbelt pretensioner to be operated.

Priority is claimed on Japanese Patent Application No. 2004-277697, filed September 24, 2004.

Description of Related Art

Conventionally, collision determining apparatuses for vehicles are known that are provided with a plurality of acceleration sensors that are placed in different locations and, for example, measure the acceleration (or the deceleration) that is applied to a vehicle. These collision determining apparatuses cause an occupant protection apparatus such as an airbag apparatus or a seatbelt pretensioner to be operated in accordance with the results of a comparison between respective integral values that are obtained by performing primary integration for time on acceleration signals that are output from each acceleration sensor (for example, refer to Japanese Unexamined Patent Application, First Publication No. 2001-277994).

In a collision determining apparatus for a vehicle based on the above conventional technology, in accordance, for example, with the state of a collision that is occurred and with the placement positions of each of the acceleration sensors, there are cases when a relatively sizeable discrepancy arises in the timings at which integral values of accelerations signals from each acceleration sensor are at their maximum. In such cases, if settings are made such that the operation of the occupant protection apparatuses is controlled, for example, in accordance with whether or not the integral values of the acceleration signals from the plurality of acceleration sensors exceeds predetermined respective determination threshold values, then a discrepancy arises in the timings at which it is determined that the integral values of the accelerations signals exceed the predetermined determination threshold values in each of the acceleration sensors. Consequently, the problem arises that it is difficult to appropriately control the operation of the occupant protection apparatuses.

To deal with this problem, a method is known in which, for example, when it is determined that an integral value of acceleration signals from an appropriate acceleration sensor exceeds a predetermined determination threshold value, by maintaining this determination result as valid for a predetermined length of time, the discrepancy in the timings of the determinations between each of the plurality of acceleration sensors is eliminated. However, the problem arises that it is not possible to accurately determine whether or not a collision is occurred simply by maintaining a determination result for a predetermined length of time.

Moreover, in a method in which the determination threshold values for integral values of the acceleration signals are set to relatively small values so that the duration of the continuous detection of the collision state is lengthened, the problem arises that the determination of a collision occurrence is still performed superfluously even for collisions in which the operation of an occupant protection apparatus is unnecessary.

EP-A-0 430 813 (preamble of claims 1 and 2) discloses a safety system for a motor vehicle. It comprises means for controlling one safety member in a situation where the motor vehicle is turning over. Said means includes longitudinal, transversal and vertical accelerometers, a rate gyro and electronic means for processing signals from the gyro and the accelerometers.

DE-A-19 817 780 discloses a device for determining deformation of a vehicle side part. It comprises acceleration sensors in the left side and the right side of the vehicle.

SUMMARY OF THE INVENTION

The present invention was conceived in view of the above described circumstances and it is an object thereof to provide a collision determining apparatus for a vehicle that is capable of performing an accurate collision determination in a short length of time based on acceleration signals that are output from a plurality of acceleration sensors.

The collision determining apparatus for a vehicle of the present invention includes: a first acceleration measuring device which measures an acceleration acting on an outer peripheral portion of the vehicle; a second acceleration measuring device which measures an acceleration acting on a position further to an inner portion side of the vehicle than the first acceleration measuring device; a first change in movement speed calculating device which calculates a first change in movement speed based on the acceleration which is measured by the first acceleration measuring device; an interval integral value calculating device which calculates an interval integral value in a relatively long time interval for the acceleration which is measured by the first acceleration measuring device; a second change in movement speed calculating device which calculates a second change in movement speed based on the acceleration which is measured by the second acceleration measuring device; a first collision determining device which determines whether or not the first change in movement speed exceeds a predetermined first collision determining threshold value; a continuation determining device which determines whether or not the interval integral value exceeds a predetermined continuation determining threshold value; a second collision determining device which determines whether or not the second change in movement speed exceeds a predetermined second collision determining threshold value; a collision determination continuing device which sets a collision continuation determining value which indicates that a collision is in a state of continuation to an ON state when it is determined by the first collision determining device that the first change in movement speed exceeds the first collision determining threshold value and it is also determined by the continuation determining device that the interval integral value exceeds the continuation determining threshold value, and which sets the collision continuation determining value to an OFF state when it is determined by the continuation determining device that the interval integral value does not exceed the continuation determining threshold value; and a control signal generating device which generates a control signal which instructs that an occupant protection apparatus be operated when the collision continuation determining value is in an ON state and it is determined by the second collision determining device that the second change in movement speed exceeds the second collision determining threshold value.

According to the collision determining apparatus for a vehicle of the present invention, when, as a result of it first being determined that the first change in movement speed exceeds a first collision determining threshold value and of it also being determined that the interval integral value exceeds a continuation determining threshold value, the occurrence of a collision is detected based on acceleration which is measured by the first acceleration measuring device, then a collision continuation determining value which indicates that a collision is in a state of continuation is set to an ON state. This ON state of the collision continuation determining value continues for a period until the interval integral value becomes less than the continuation determining threshold value.

In addition, when it is determined that the second change in movement speed exceeds the second collision determining threshold value while the collision continuation determining value is still in an ON state, it is determined that a collision event requiring the operation of an occupant protection apparatus which is detected based on acceleration from the first acceleration measuring device is detected based on acceleration from the second acceleration measuring device, and a control signal which instructs that the occupant protection apparatus be operated is generated.

As a result, even when a relatively large discrepancy arises between the timings at which integral values of accelerations from each of the acceleration sensors are at their maximum as a result, for example, of the placements of each of the acceleration sensors and also because of the state of the collision which is occurred and the like, it is possible to accurately determine the existence or otherwise of a collision occurrence and to appropriately operate the occupant protection apparatus.

The collision determining apparatus for a vehicle of the present invention includes: a first acceleration measuring device that measures an acceleration acting on an outer peripheral portion of the vehicle; a second acceleration measuring device which measures an acceleration acting on a position further to an inner portion side of the vehicle than the first acceleration measuring device; a first change in movement speed calculating device which calculates a first change in movement speed based on the acceleration which is measured by the first acceleration measuring device; an interval integral value calculating device which calculates an interval integral value in a predetermined time interval for the acceleration which is measured by the first acceleration measuring device; a second change in movement speed calculating device which calculates a second change in movement speed based on the acceleration which is measured by the second acceleration measuring device; a first collision determining device which determines whether or not the first change in movement speed exceeds a predetermined first collision determining threshold value; a continuation determining device which determines whether or not the interval integral value exceeds a predetermined high side continuation determining threshold value or a predetermined low side continuation determining threshold value; a second collision determining device which determines whether or not the second change in movement speed exceeds a predetermined second collision determining threshold value; a collision determination continuing device which sets a collision continuation determining value which indicates that a collision is in a state of continuation to an ON state when it is determined by the first collision determining device that the first change in movement speed exceeds the first collision determining threshold value and it is also determined by the continuation determining device that the interval integral value exceeds the predetermined high side continuation determining threshold value, and which sets the collision continuation determining value to an OFF state when it is determined by the continuation determining device that the interval integral value is less than the predetermined low side continuation determining threshold value; and a control signal generating device which generates a control signal which instructs that an occupant protection apparatus be operated when the collision continuation determining value is in an ON state and it is determined by the second collision determining device that the second change in movement speed exceeds the second collision determining threshold value.

According to the collision determining apparatus for a vehicle of the present invention, when, as a result of it first being determined that the first change in movement speed exceeds the first collision determining threshold value and of it also being determined that the interval integral value exceeds the continuation determining threshold value, the occurrence of a collision requiring the operation of an occupant protection apparatus is detected based on the acceleration which is measured by the first acceleration measuring device, then a collision continuation determining value which indicates that a collision is in a state of continuation is set to an ON state. This ON state of the collision continuation determining value continues for a period until the interval integral value becomes less than the low side continuation determining threshold value, namely, for the period which is required for the collision energy to be reduced to a level where it does not cause any injury to an occupant.

In addition, when it is determined that the second change in movement speed exceeds the second collision determining threshold value while the collision continuation determining value is still in an ON state, it is determined that a collision event requiring the operation of an occupant protection apparatus which is detected based on the acceleration from the first acceleration measuring device is also detected based on the acceleration from the second acceleration measuring device, and a control signal which instructs that the occupant protection apparatus be operated is generated.

As a result, even when a relatively large discrepancy arises between the timings at which integral values of accelerations from each of the acceleration sensors are at their maximum as a result, for example, of the placement positions of each of the acceleration sensors and also because of the state of the collision which is occurred and the like, it is possible to accurately determine the existence or otherwise of a collision occurrence. Furthermore, it is possible to achieve an improvement in reliability when determining a continued collision state and to appropriately operate the occupant protection apparatus.

BRIEF DESCRIPTION OF THE DRAWINGS

FIG 1 is a view showing a first embodiment of the collision determining apparatus for a vehicle of the present invention, and is a schematic view of a vehicle which is equipped with a collision determining apparatus for a vehicle.

FIG. 2 is a block diagram of the collision determining apparatus for a vehicle.

FIG. 3 is a flow chart showing an operation of the collision determining apparatus for a vehicle.

FIG. 4 is a view showing an example of temporal changes in a change in movement speed of an occupant $\Delta V_{hold}$.

FIG. 5 is a view showing an example of temporal changes in a change in movement speed of an occupant $\Delta V_{SIS}$.

FIG. 6 is a view showing an example of temporal changes in a change in movement speed of an occupant $\Delta V_{ECU}$.

FIG. 7 is a view showing a variant example of the first embodiment of the collision determining apparatus for a vehicle of the present invention, and is a flowchart showing an operation of the collision determining apparatus for a vehicle.

FIG 8 is a view showing an example of temporal changes in a change in movement speed of an occupant $\Delta V_{hold}$.

DETAILED DESCRIPTION OF THE INVENTION

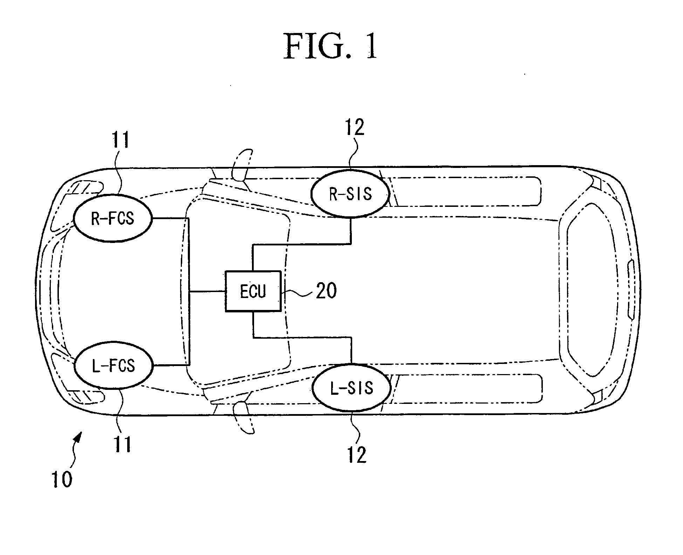

An embodiment of the collision determining apparatus for a vehicle of the present invention will now be described with reference made to FIGS. 1 through 8.

As is shown in FIG. 1, a collision determining apparatus for a vehicle 10 of the present embodiment is provided with an electronic control unit (ECU) 20 that is located in the center of the vehicle and a plurality of satellite sensors. The satellite sensors are formed by a plurality of acceleration sensors, for example, two front crash sensors (i.e., L-FCS and R-FCS) 11 that are located at a right front portion and a left front portion of the vehicle, and two side impact sensors (first acceleration measuring device (i.e., L-SIS and R-SIS)) 12 that are located at a right side portion and a left side portion of the vehicle. Acceleration signals that are output from the respective satellite sensors are input into the electronic control unit 20.

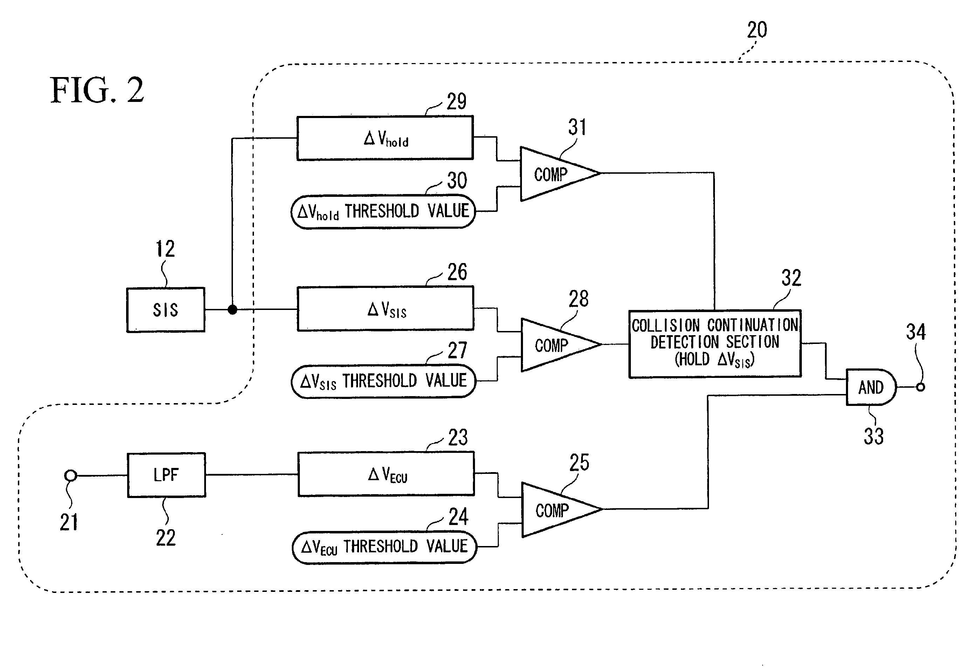

As is shown in FIG. 2, the electronic control unit 20 is provided with an acceleration sensor (second acceleration measuring device) 21, a filter processing section 22, a $\Delta V_{ECU}$ calculation section (second change in movement speed calculating device) 23, a $\Delta V_{ECU}$ threshold value setting section 24, a $\Delta V_{ECU}$ comparison section (second collision determining device) 25, a $\Delta V_{SIS}$ calculation section (first change in movement speed calculating device) 26, a $\Delta V_{SIS}$ threshold value setting section 27, a $\Delta V_{SIS}$ comparison section (first collision determining device) 28, a $\Delta V_{hold}$ calculation section (interval integral value calculating device) 29, a $\Delta V_{hold}$ threshold value setting section 30, a $\Delta V_{hold}$ comparison section (continuation determining device) 31, a collision continuation detecting section (collision determination continuing device) 32, an AND circuit 33, and a startup signal generating section (control signal generating device) 34.

The acceleration sensor 21 outputs acceleration signals G at a voltage level that matches the size of acceleration (or deceleration) acting, for example, in a longitudinal direction or transverse direction of a vehicle.

The filter processing section 22 is equipped with a low pass filter (LPF) that removes high frequency components, which are noise components, from the accelerations signals G that are output from the acceleration sensor 21.

The $\Delta V_{ECU}$ calculation section 23 performs a primary integration for time on the acceleration signals G that are output from the filter processing section 22, and, as is shown below in Formula (1), for example, calculates a change in movement speed of an occupant $\Delta V_{ECU}$ in a time interval having a predetermined time width n relative to the current time tp (i.e., tp - n ≤ t ≤ tp), and outputs the result to the $\Delta V_{ECU}$ comparison section 25.

The $\Delta V_{ECU}$ comparison section 25 determines whether or not the change in movement speed of an occupant $\Delta V_{ECU}$ that is input from the $\Delta V_{ECU}$ calculation section 23 is greater than a predetermined $\Delta V_{ECU}$ threshold value that is input from the $\Delta V_{ECU}$ threshold value setting section 24. When the result of this determination is "YES", then a determination value having a true value of "1" is output to the AND circuit 33. When, however, the result of the determination is "NO", then a determination value having a pseudo value of "0" is output to the AND circuit 33.

$$\Delta V_{ECU} = \int_{tp-n}^{tp} G_{ECU}(t)dt \qquad \cdots ( 1 )$$

The $\Delta V_{SIS}$ calculation section 26 performs a primary integration for time on the acceleration signals $G_{SIS}$ that are output from a side impact sensor (i.e., L-SIS or R-SIS) 12, and, as is shown below in Formula (2), for example, calculates a change in movement speed of an occupant $\Delta V_{SIS}$ in a time interval having a predetermined time width n relative to the current time tp (i.e., tp - n ≤ t ≤ tp), and outputs the result to the $\Delta V_{SIS}$ comparison section 28.

The $\Delta V_{SIS}$ comparison section 28 determines whether or not the change in movement speed of an occupant $\Delta V_{SIS}$ that is input from the $\Delta V_{SIS}$ calculation section 26 is greater than a predetermined $\Delta V_{SIS}$ threshold value that is input from the $\Delta V_{SIS}$ threshold value setting section 27. The result of this determination is output to the collision continuation detecting section 32.

$$\Delta V_{SIS} = \int_{tp-n}^{tp} G_{SIS}(t)dt \qquad \cdots ( 2 )$$

The $\Delta V_{hold}$ calculation section 29 performs a primary integration for time on the acceleration signals $G_{SIS}$ that are output from a side impact sensor (i.e., L-SIS or R-SIS) 12, and, as is shown below in Formula (3), for example, calculates a change in movement speed of an occupant $\Delta V_{hold}$ in a time interval having a predetermined time width m relative to the current time tp (i.e., tp - m ≤ t ≤ tp), and outputs the result to the $\Delta V_{hold}$ comparison section 31.

The $\Delta V_{hold}$ comparison section 31 determines whether or not the change in movement speed of an occupant $\Delta V_{hold}$ that is input from the $\Delta V_{hold}$ calculation section 29 is greater than a predetermined $\Delta V_{hold}$ threshold value that is input from the $\Delta V_{hold}$ threshold value setting section 30. The result of this determination is output to the collision continuation detecting section 32.

$$\Delta V_{hold} = \int_{tp-m}^{tp} G_{hold}(t)dt \qquad \cdots ( 3 )$$

The collision continuation detecting section 32 outputs a true value of "1" to the AND circuit 33 as a collision continuation determining value hold, which shows that a state exists in which a collision is continuing, when it is determined by the $\Delta V_{SIS}$ comparison section 28 that the change in movement speed of an occupant $\Delta V_{SIS}$ that is input from the $\Delta V_{SIS}$ calculation section 26 is greater than the predetermined $\Delta V_{SIS}$ threshold value that is input from the $\Delta V_{SIS}$ threshold value setting section 27, and when it is determined by the $\Delta V_{hold}$ comparison section 31 that the change in movement speed of an occupant $\Delta V_{hold}$ that is input from the $\Delta V_{hold}$ calculation section 29 is greater than the predetermined $\Delta V_{hold}$ threshold value that is input from the $\Delta V_{hold}$ threshold value setting section 30.

Moreover, when it is determined by the $\Delta V_{hold}$ comparison section 31 that the change in movement speed of an occupant $\Delta V_{hold}$ that is input from the $\Delta V_{hold}$ calculation section 29 is less than the predetermined $\Delta V_{hold}$ threshold value that is input from the $\Delta V_{hold}$ threshold value setting section 30, a pseudo value of "0" is output as a collision continuation determining value hold to the AND circuit 33.

The AND circuit 33 outputs to the startup signal generating section 34 a signal that is obtained from a logical product of a determination value that is output from the $\Delta V_{ECU}$ comparison section 25 and a collision continuation determining value that is output from the collision continuation detecting section 32.

The startup signal generating section 34 outputs, in accordance with a signal that is output from the AND circuit 33, a command signal that causes an occupant protection apparatus such as, for example, an airbag apparatus or a seatbelt pretensioner to be operated.

The collision determining apparatus for a vehicle 10 according to the present embodiment has the above described structure. Next, a description will be given of the operation of this collision determining apparatus for a vehicle 10.

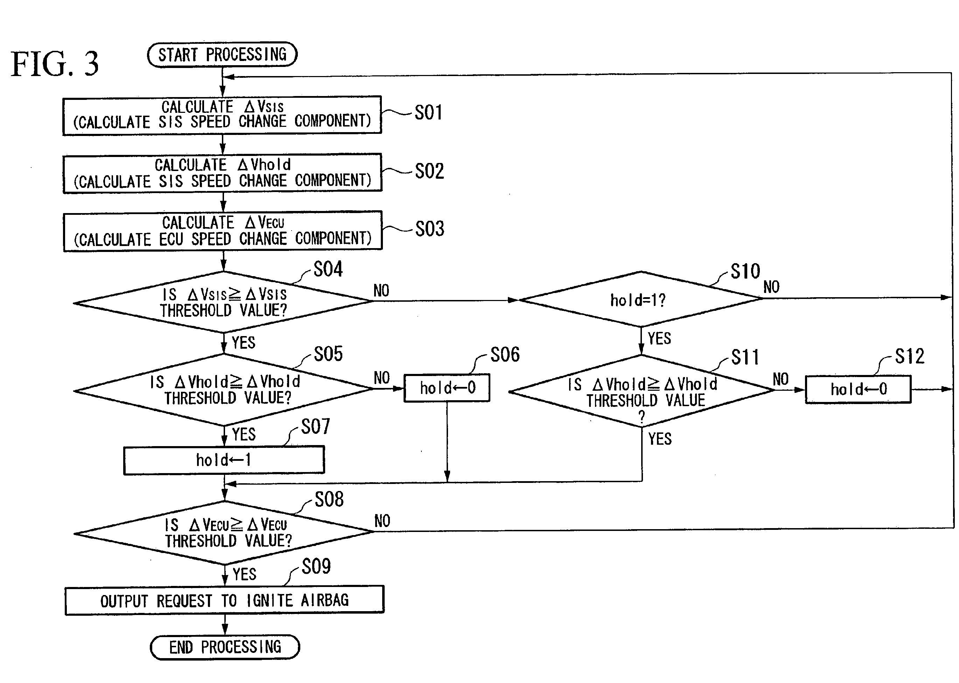

Firstly, in step S01 shown in FIG. 3, primary integration for time is performed on the acceleration signals $G_{SIS}$, as is shown in Formula (2) above, and a change in movement speed of an occupant $\Delta V_{SIS}$ in a time interval having a predetermined time width n relative to the current time tp (i.e., tp - n $\leq$ t $\leq$ tp) is calculated.

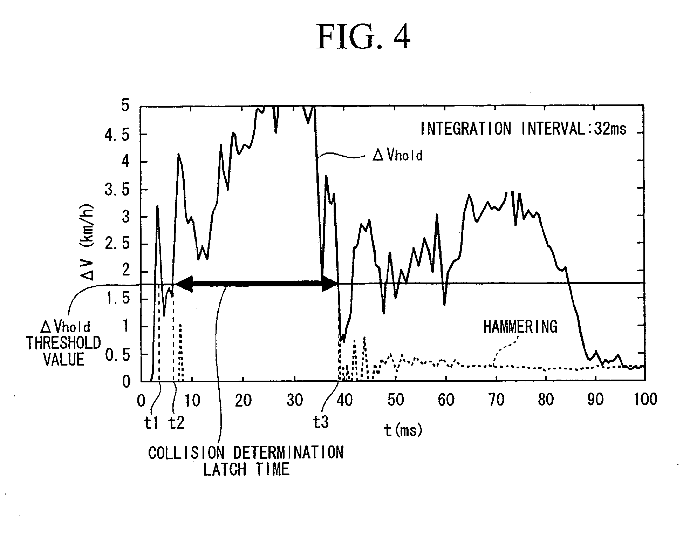

Next, in step S02, primary integration for time is performed on the acceleration signals $G_{SIS}$, as is shown in Formula (3) above, and a change in movement speed of an occupant $\Delta V_{hold}$ in a time interval having a relatively long predetermined time width m (for example, the 32 ms shown in FIG 4) relative to the current time tp (i.e., tp - m $\leq$ t $\leq$ tp) is calculated.

Next, in step S03, primary integration for time is performed on the acceleration signals $G_{ECU}$, as is shown in Formula (1) above, and a change in movement speed of an occupant $\Delta V_{ECU}$ in a time interval having a predetermined time width n relative to the current time tp (i.e., tp - n $\leq$ t $\leq$ tp) is calculated.

Next, in step S04, a determination is made as to whether or not the change in movement speed of an occupant $\Delta V_{SIS}$ is equal to or greater than the predetermined $\Delta V_{SIS}$ threshold value.

When the result of this determination is "NO", the routine moves to step S10 (described below).

When, however, the result of this determination is "YES", the routine moves to step S05.

In step S05, a determination is made as to whether or not the change in movement speed of an occupant $\Delta V_{hold}$ is equal to or greater than the predetermined $\Delta V_{hold}$ threshold value.

When the result of this determination is "NO", the routine moves to step S06 and a pseudo value of "0" is set for the collision continuation determining value hold. The routine then moves to step S08.

When, however, the result of this determination is "YES", the routine moves to step S07 and a true value of "1" is set for the collision continuation determining value hold. The routine then moves to step S08.

In step S08, a determination is made as to whether or not the change in movement speed of an occupant $\Delta V_{ECU}$ is equal to or more than the predetermined $\Delta V_{ECU}$ threshold value.

When, the result of the determination in step S08 is "NO", the routine returns to the above described step S01.

When, however, the result of the determination in step S08 is "YES", a command signal is output requesting an ignition operation in an occupant protection apparatus, for example, an airbag apparatus, and the processing sequence is ended.

In step S10, a determination is made as to whether or not a true value of "1" is set for the collision continuation determining value hold.

When the result of this determination is "NO", the routine returns to step S01.

When, however, the result of this determination is "YES", the routine moves to step S11.

In step S 11, a determination is made as to whether or not the change in movement speed of an occupant $\Delta V_{hold}$ is equal to or more than the predetermined $\Delta V_{hold}$ threshold value.

When the result of the determination in step S11 is "NO", the routine moves to step S12 and a pseudo value of "0" is set for the collision continuation determining value hold. The routine then returns to step S01.

When, however, the result of the determination in step S11 is "YES", the routine moves to step S08.

As a result of the above, as is shown, for example, in FIG 4, after the time t1 when the change in movement speed of an occupant $\Delta V_{SIS}$ becomes equal to or more than the predetermined $\Delta V_{SIS}$ threshold value and the occurrence of a collision is detected, the time period extending from the time t2 to the time t3, during which a state continues in which the change in movement speed of an occupant $\Delta V_{hold}$ is equal to or more than the predetermined $\Delta V_{hold}$ threshold value, is considered to be a collision continuation state (i.e., a collision determination latch time), and a state in which the change in movement speed of an occupant $\Delta V_{SIS}$ is equal to or more than the predetermined $\Delta V_{SIS}$ threshold value is also regarded as continuing.

In addition, when the change in movement speed of an occupant $\Delta V_{ECU}$ is equal to or more than the predetermined $\Delta V_{ECU}$ threshold value in this collision continuation state, a request to ignite an airbag apparatus is output.

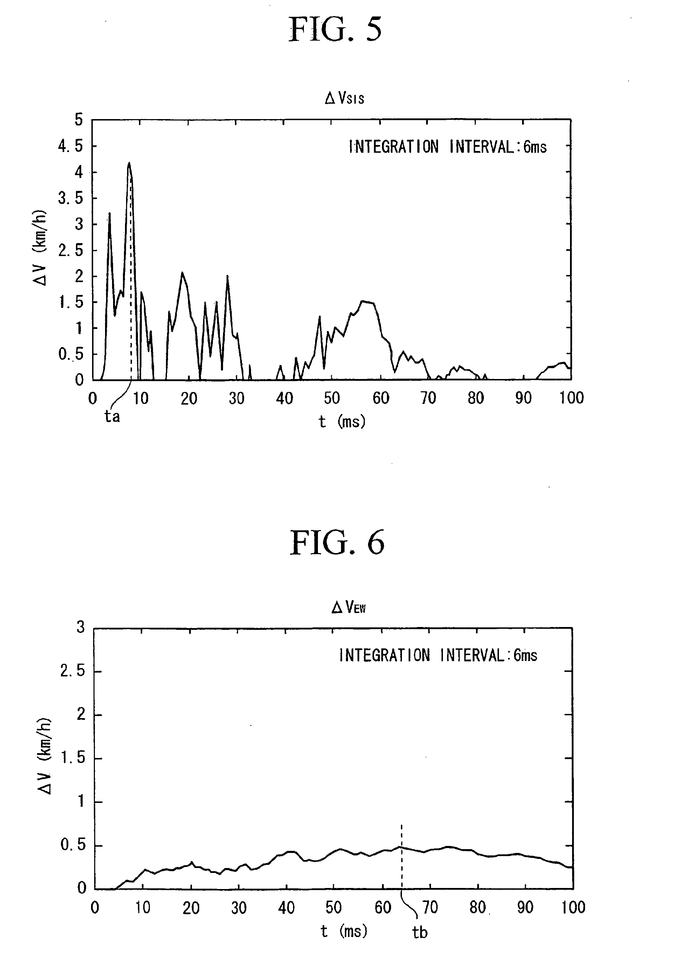

As described above, according to the collision determining apparatus for a vehicle 10 of the present embodiment, in accordance, for example, with the placement positions of the acceleration sensor 21 and the satellite sensors (i.e., the front crash sensors 11 and the side impact sensors 12) as well as the state of the collision that has occurred and the like, as is shown in FIGS. 5 and 6, for example, even if a relatively large discrepancy arises between the timings (for example, the timing ta shown in FIG. 5 and the timing tb shown in FIG. 6) at which integral values (i.e., the change in movement speed of an occupant $\Delta V_{SIS}$ and the change in movement speed of an occupant $\Delta V_{ECU}$) of acceleration signals $G_{SIS}$ and $G_{ECU}$ from the acceleration sensor 21 and the satellite sensors are at their maximum, by considering the time period during which a state continues in which the change in movement speed of an occupant $\Delta V_{hold}$ is equal to or more than the predetermined $\Delta V_{hold}$ threshold value to be a collision continuation state, it is possible, based on the change in movement speed of an occupant $\Delta V_{SIS}$ and $\Delta V_{ECU}$, to accurately determine the existence or otherwise of a collision occurrence and to appropriately operate an occupant protection apparatus.

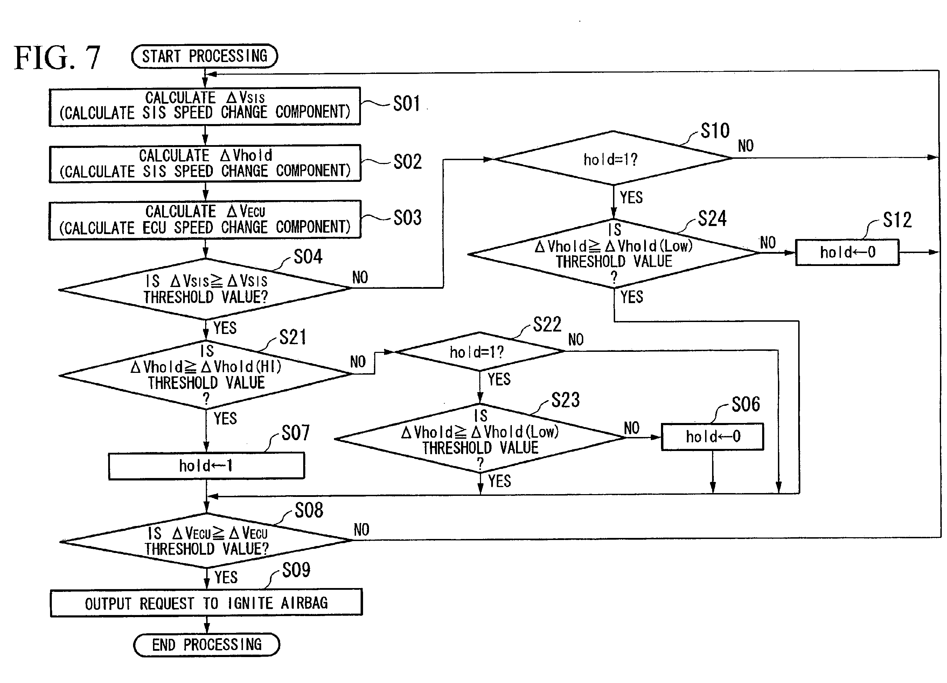

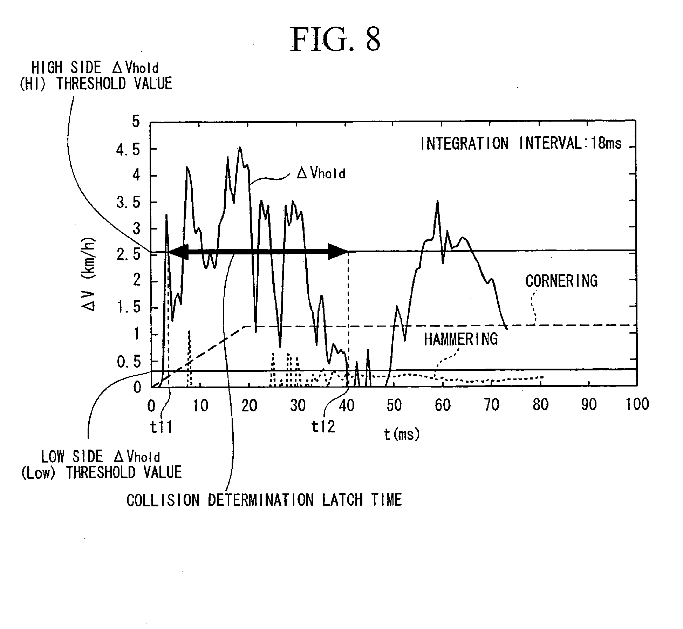

Note that, in the above described embodiment, a determination is made as to whether or not the change in movement speed of an occupant $\Delta V_{hold}$ in a time interval (i.e., tp - m ≤ t ≤ tp) having a relatively long predetermined time width m relative to the current time tp is equal to or more than the predetermined $\Delta V_{hold}$ threshold value, however, the present invention is not limited to this, and, as is shown, for example, in FIG 7, it is also possible to make a determination as to whether or not the change in movement speed of an occupant $\Delta V_{hold}$ in a time interval (i.e., tp - n ≤ t ≤ tp) having a shorter predetermined time width n (for example, the 18 ms shown in FIG. 8 or the like) is equal to or less than a predetermined high side $\Delta V_{hold\ (HI)}$ threshold value and is also equal to or more than a predetermined low side $\Delta V_{hold\ (Low)}$ threshold value.

This variant example differs from the above described embodiment in that the processing of step S21 is executed instead of the processing of step S05 shown in FIG 3, and the processing of step S24 is executed instead of the processing of step S 11 shown in FIG 3.

Namely, in step S21 shown in FIG 7, a determination is made as to whether or not the change in movement speed of an occupant $\Delta V_{hold}$ is equal to or more than the high side $\Delta V_{hold\ (HI)}$ threshold value.

When the result of this determination is "YES", the routine moves to step S07.

When, however, the result of the determination is "NO", the routine moves to step S22.

In step S22, a determination is made as to whether or not a true value of "1" is set for the collision continuation determining value hold.

When the result of the determination in step S22 is "NO", the routine moves to step S08.

When, however, the result of the determination in step S22, is "YES", the routine moves to step S23.

In step S23, a determination is made as to whether or not the change in movement speed of an occupant $\Delta V_{hold}$ is equal to or more than the low side $\Delta V_{hold\ (Low)}$ threshold value.

When the result of the determination in step S23 is "NO", the routine moves to step S06.

When, however, the result of the determination in step S23 is "YES", the routine moves to step S08.

In step S24, a determination is made as to whether or not the change in movement speed of an occupant $\Delta V_{hold}$ is equal to or more than the low side $\Delta V_{hold\ (Low)}$ threshold value.

When the result of the determination in step S24 is "NO", the routine moves to step S12.

When, however, the result of the determination in step S24 is "YES", the routine moves to step S08.

In this variant example, as is shown, for example, in FIG 8, after the time t1 when the change in movement speed of an occupant $\Delta V_{SIS}$ becomes equal to or more than the predetermined $\Delta V_{SIS}$ threshold value and the occurrence of a collision is detected, the time period extending from the time t11 when the change in movement speed of an occupant $\Delta V_{hold}$ becomes equal to or more than the predetermined high side $\Delta V_{hold(HI)}$ threshold value to the time t12 when the change in movement speed of an occupant $\Delta V_{hold}$ is less than the low side $\Delta V_{hold(Low)}$ threshold value is considered to be a collision continuation state (i.e., a collision determination latch time), and a state in which the change in movement speed of an occupant $\Delta V_{SIS}$ is equal to or more than the predetermined $\Delta V_{SIS}$ threshold value is also regarded as continuing. In addition, when the change in movement speed of an occupant $\Delta V_{ECU}$ is equal to or more than the predetermined $\Delta V_{ECU}$ threshold value in this collision continuation state, a request to ignite an airbag apparatus is output.

In this case, the high side $\Delta V_{hold(HI)}$ threshold value is set to a value (for example, a value that excludes cornering or the like and acceleration change components that are caused by an acceleration that is generated by a sideways slipping or turning of a vehicle, as is shown in FIG. 8) that allows collisions smaller than a predetermined size to be excluded, and the low side $\Delta V_{hold(Low)}$ threshold value is set to a value (for example, the hammering and the like shown in FIG 8) that allows collisions having a collision energy that will not give rise to any injury to an occupant to be excluded. As a result, the stability and reliability of a collision detection can be improved compared with when the change in movement speed of an occupant $\Delta V_{hold}$ is calculated in a time interval (i.e., tp - m ≤ t ≤ tp) having a relatively long predetermined time width m.

Note also that, in the above described embodiment, an airbag apparatus and a seatbelt pretensioner are driven and controlled to serve as occupant protection apparatuses, however, the present invention is not limited to this and it is also possible to drive and control seat devices whose seat position and configuration and the like are capable of being altered.

**Claims**

1. A collision determining apparatus for a vehicle, comprising:

   a first acceleration measuring device (12) and a second acceleration measuring device (21), **characterized in that** said first acceleration measuring device (12) measures acceleration acting on an outer peripheral portion of a vehicle, and said second acceleration measuring device (21) measures acceleration acting on a position further to an inner portion side of a vehicle than the first acceleration measuring device (12); and **in that** it further comprises:

a first change in movement speed calculating device (26) which calculates a first change in movement speed based on acceleration which is measured by the first acceleration measuring device (12);

an interval integral value calculating device (29) which calculates an interval integral value in a relatively long time interval for acceleration which is measured by the first acceleration measuring device (12);

a second change in movement speed calculating device (23) which calculates a second change in movement speed based on acceleration which is measured by the second acceleration measuring device (21);

a first collision determining device (28) which determines whether or not the first change in movement speed which is calculated by the first change in movement speed calculating device (26) exceeds a predetermined first collision determining threshold value;

a continuation determining device (31) which determines whether or not an interval integral value which is calculated by the interval integral value calculating device (29) exceeds a predetermined continuation determining threshold value;

a second collision determining device (25) which determines whether or not the second change in movement speed which is calculated by the second change in movement speed calculating device (23) exceeds a predetermined second collision determining threshold value;

a collision determination continuing device (32) which sets a collision continuation determining value which indicates that a collision is in a state of continuation to an ON state when it is determined by the first collision determining device (28) that the first change in movement speed exceeds the first collision determining threshold value and it is also determined by the continuation determining device (31) that the interval integral value exceeds the continuation determining threshold value, and which sets the collision continuation determining value to an OFF state when it is determined by the continuation determining device (31) that the interval integral value does not exceed the continuation determining threshold value; and

a control signal generating device (34) that generates a control signal which instructs that an occupant protection apparatus be operated when the collision continuation determining value is in an ON state and it is determined by the second collision determining device (25) that the second change in movement speed exceeds the second collision determining threshold value.

2. A collision determining apparatus for a vehicle, comprising:

a first acceleration measuring device (12) and a second acceleration measuring device (21), **characterized in that** said first acceleration measuring device (12) measures acceleration acting on an outer peripheral portion of the vehicle, and said second acceleration measuring device (21) measures acceleration acting on a position further to an inner portion side of a vehicle than the first acceleration measuring device (12); and **in that** it further comprises:

a first change in movement speed calculating device (26) which calculates a first change in movement speed based on acceleration which is measured by the first acceleration measuring device (12);

an interval integral value calculating device (29) which calculates an interval integral value in a predetermined time interval for acceleration which is measured by the first acceleration measuring device (12);

a second change in movement speed calculating device (23) which calculates a second change in movement speed based on acceleration which is measured by the second acceleration measuring device (21);

a first collision determining device (28) which determines whether or not the first change in movement speed which is calculated by the first change in movement speed calculating device (26) exceeds a predetermined first collision determining threshold value;

a continuation determining device (31) which determines whether or not an interval integral value which is calculated by the interval integral value calculating device (29) exceeds a predetermined high side continuation determining threshold value or a predetermined low side continuation determining threshold value;

a second collision determining device (25) which determines whether or not the second change in movement speed which is calculated by the second change in movement speed calculating device (23) exceeds a predetermined second collision determining threshold value;

a collision determination continuing device (32) which sets a collision continuation determining value which indicates that a collision is in a state of continuation to an ON state when it is determined by the first collision determining device (28) that the first change in movement speed exceeds the first collision determining threshold value and it is also determined by the continuation determining device (31) that the interval integral value exceeds the predetermined high side continuation determining threshold value, and which sets the collision continuation determining value to an OFF state when it is determined by the continuation determining device (31) that the interval integral value is less than the predetermined low side continuation determining threshold value; and

a control signal generating device (34) which generates a control signal which instructs that an occupant protection apparatus be operated when the collision continuation determining value is in an ON state and it is determined by the second collision determining device (25) that the second change in movement speed exceeds the second collision determining threshold value.

**Patentansprüche**

1. Kollisionsbestimmungsvorrichtung für ein Fahrzeug, die umfasst:

eine erste Beschleunigungsmessvorrichtung (12) und eine zweite Beschleunigungsmessvorrichtung (21), **dadurch gekennzeichnet, dass** die erste Beschleunigungsmessvorrichtung (12) die auf einen äußeren Umfangsabschnitt eines Fahrzeugs wirkende Beschleunigung misst und die zweite Beschleunigungsmessvorrichtung (21) eine Beschleunigung misst, die auf eine Position wirkt, die sich weiter auf Seiten eines inneren Abschnitts eines Fahrzeugs als die erste Beschleunigungsmessvorrichtung (12) befindet; und dass sie ferner umfasst:

eine erste Bewegungsgeschwindigkeitsänderung-Berechnungsvorrichtung (26), die eine erste Bewegungsgeschwindigkeitsänderung anhand der Beschleunigung berechnet, die durch die erste Beschleunigungsmessvorrichtung (12) gemessen wird;

eine Intervallintegralwert-Berechnungsvorrichtung (29), die einen Intervallintegralwert in einem verhältnismäßig langen Zeitintervall für die Beschleunigung, die durch die erste Beschleunigungsmessvorrichtung (12) gemessen wird, berechnet;

eine zweite Bewegungsgeschwindigkeitsänderung-Berechnungsvorrichtung (23), die eine zweite Bewegungsgeschwindigkeitsänderung anhand der Beschleunigung berechnet, die durch die zweite Beschleunigungsmessvorrichtung (21) gemessen wird;

eine erste Kollisionsbestimmungsvorrichtung (28), die bestimmt, ob die erste Bewegungsgeschwindigkeitsänderung, die durch die erste Bewegungsgeschwindigkeitsänderung-Berechnungsvorrichtung (26) berechnet wird, einen vorgegebenen ersten Kollisionsbestimmungsschwellenwert übersteigt;

eine Andauerbestimmungsvorrichtung (31), die bestimmt, ob ein Intervallintegralwert, der durch die Intervallintegralwert-Berechnungsvorrichtung (29) berechnet wird, einen vorgegebenen Andauerbestimmungsschwellenwert übersteigt;

eine zweite Kollisionsbestimmungsvorrichtung (25), die bestimmt, ob die zweite Bewegungsgeschwindigkeitsänderung, die durch die zweite Bewegungsgeschwindigkeitsänderung-Berechnungsvorrichtung (23) berechnet wird, einen vorgegebenen zweiten Kollisionsbestimmungs-Schwellenwert übersteigt;

eine Kollisionsandauer-Bestimmungsvorrichtung (32), die einen Kollisionsandauerbestimmungswert, der angibt, dass eine Kollision in einem andauerndem Zustand ist, auf einen EIN-Zustand setzt, wenn durch die erste Kollisionsbestimmungsvorrichtung (28) bestimmt wird, dass die erste Bewegungsgeschwindigkeitsänderung den ersten Kollisionsbestimmungsschwellenwert übersteigt, und wenn außerdem durch die Andauerbestimmungsvorrichtung (31) bestimmt wird, dass der Intervallintegralwert den Andauerbestimmungsschwellenwert übersteigt, und den Kollisionsandauerbestimmungswert auf einen AUS-Zustand setzt, wenn durch die Andauerbestimmungsvorrichtung (31) bestimmt wird, dass der Intervallintegralwert den Andauerbestimmungsschwellenwert nicht übersteigt; und

eine Steuersignal-Erzeugungsvorrichtung (34), die ein Steuersignal erzeugt, das anweist, dass eine Insassenschutzvorrichtung betätigt werden soll, wenn der Kollisionsandauerbestimmungswert in einem EIN-Zustand ist und wenn durch die zweite Kollisionsbestimmungsvorrichtung (25) bestimmt wird, dass die zweite Bewegungsgeschwindigkeitsänderung den zweiten Kollisionsbestimmungsschwellenwert übersteigt.

2. Kollisionsbestimmungsvorrichtung für ein Fahrzeug, die umfasst:

eine erste Beschleunigungsmessvorrichtung (12) und eine zweite Beschleunigungsmessvorrichtung (21), **dadurch gekennzeichnet, dass** die erste Beschleunigungsmessvorrichtung (12) eine Beschleunigung misst, die auf einen äußeren Umfangsabschnitt des Fahrzeugs wirkt, und die zweite Beschleunigungsmessvorrichtung (21) eine Beschleunigung misst, die auf eine Position wirkt, die sich weiter auf Seiten eines inneren Abschnitts eines Fahrzeugs als die erste Beschleunigungsmessvorrichtung (12) befindet; und dass sie ferner umfasst:

eine erste Bewegungsgeschwindigkeitsänderung-Berechnungsvorrichtung (26), die eine erste Bewegungsgeschwindigkeitsänderung anhand der Beschleunigung, die durch die erste Beschleunigungsmessvorrichtung (12) gemessen wird, berechnet;

eine Intervallintegralwert-Berechnungsvorrichtung (29), die einen Intervallintegralwert in einem vorgegebenen Zeitintervall für die Beschleunigung, die durch die erste Beschleunigungsmessvorrichtung (12) gemessen wird, berechnet;

eine zweite Bewegungsgeschwindigkeitsänderung-Berechnungsvorrichtung (23), die eine zweite Bewegungsgeschwindigkeitsänderung anhand der Beschleunigung, die durch die zweite Beschleunigungsmessvorrichtung (21) gemessen wird, berechnet;

eine erste Kollisionsbestimmungsvorrichtung (28), die bestimmt, ob die erste Bewegungsgeschwindigkeitsänderung, die durch die erste Bewegungsgeschwindigkeitsänderung-Berechnungsvorrichtung (26) berechnet wird, einen vorgegebenen ersten Kollisionsbestimmungsschwellenwert übersteigt;

eine Andauerbestimmungsvorrichtung (31), die bestimmt, ob ein Intervallintegralwert, der durch die Intervallintegralwert-Berechnungsvorrichtung (29) berechnet wird, einen vorgegebenen hochseitigen Andauerbestimmungsschwellenwert oder einen vorgegebenen niedrigseitigen Andauerbestimmungsschwellenwert übersteigt;

eine zweite Kollisionsbestimmungsvorrichtung (25), die bestimmt, ob die zweite Bewegungsgeschwindigkeitsänderung, die durch die zweite Bewegungsgeschwindigkeitsänderung-Berechnungsvorrichtung (23) berechnet wird, einen vorgegebenen zweiten Kollisionsbestimmungsschwellenwert übersteigt;

eine Kollisionsandauer-Bestimmungsvorrichtung (32), die einen Kollisionsandauerbestimmungswert, der angibt, dass eine Kollision in einem andauerndem Zustand ist, auf einen EIN-Zustand setzt, wenn durch die erste Kollisionsbestimmungsvorrichtung (28) bestimmt wird, dass die erste Bewegungsgeschwindigkeitsänderung den ersten Kollisionsbestimmungsschwellenwert übersteigt, und wenn außerdem durch die Andauerbestimmungsvorrichtung (31) bestimmt wird, dass der Intervallintegralwert den vorgegebenen hochseitigen Andauerbestimmungsschwellenwert übersteigt, und den Kollisionsandauerbestimmungswert auf einen AUS-Zustand setzt, wenn durch die Andauerbestimmungsvorrichtung (31) bestimmt wird, dass der Intervallintegralwert niedriger als der vorgegebene niedrigseitige Andauerbestimmungsschwellenwert ist; und

eine Steuersignal-Erzeugungsvorrichtung (34), die ein Steuersignal erzeugt, das anweist, dass eine Insassenschutzvorrichtung betätigt werden soll, wenn der Kollisionsandauerbestimmungswert in einem EIN-Zustand ist und wenn durch die zweite Kollisionsbestimmungsvorrichtung (25) bestimmt wird, dass die zweite Bewegungsgeschwindigkeitsänderung den zweiten Kollisionsbestimmungsschwellenwert übersteigt.

## Revendications

1. Dispositif de détermination de collision pour un véhicule, comportant :

un premier dispositif de mesure d'accélération (12) et un second dispositif de mesure d'accélération (21), **caractérisé en ce que** ledit premier dispositif de mesure d'accélération (12) mesure l'accélération agissant sur une partie périphérique externe d'un véhicule, et ledit second dispositif de mesure d'accélération (21) mesure l'accélération agissant sur une position au-delà d'un côté de partie plus interne d'un véhicule que le premier dispositif de mesure d'accélération (12) ; et **en ce qu'**il comporte en outre :

un premier dispositif de calcul de vitesse de changement de mouvement (26) qui calcule une première vitesse de changement de mouvement sur la base d'une accélération qui est mesurée par le premier dispositif de mesure d'accélération (12) ;

un dispositif de calcul de valeur intégrale d'intervalle (29) qui calcule une valeur intégrale d'intervalle sur un intervalle de temps relativement long pour l'accélération qui est mesurée par le premier dispositif de mesure d'accélération (12) ;

un second dispositif de calcul de vitesse de changement de mouvement (23) qui calcule une seconde vitesse de changement de mouvement sur la base d'une accélération qui est mesurée par le second dispositif de mesure d'accélération (21) ;

un premier dispositif de détermination de collision (28) qui détermine si oui ou non la première vitesse de changement de mouvement qui est calculée par le premier dispositif de calcul de vitesse de changement de mouvement (26) excède une première valeur seuil de détermination de collision prédéterminée ;

un dispositif de détermination de continuation (31) qui détermine si oui ou non une valeur intégrale d'intervalle qui est calculée par le dispositif de calcul de valeur intégrale d'intervalle (29) excède une valeur seuil de détermination de continuation prédéterminée ;

un second dispositif de détermination de collision (25) qui détermine si oui ou non la seconde vitesse de changement de mouvement qui est calculée par le second dispositif de calcul de modification de vitesse de mouvement (23) excède une seconde valeur seuil de détermination de collision ;

un dispositif de continuation de détermination de collision (32) qui établit une valeur de détermination de continuation de collision qui indique qu'une collision est dans un état de continuation à un état MARCHE lorsqu'il est déterminé par le premier dispositif de détermination de collision (28) que la première vitesse de changement de mouvement excède la première valeur seuil de détermination de collision et qu'il est également déterminé par le dispositif de détermination de continuation (31) que la valeur intégrale d'intervalle excède la valeur seuil de détermination de continuation, et qui établit la valeur de détermination de continuation de collision à un état ARRÊT lorsqu'il est déterminé par le dispositif de détermination de continuation (31) que la valeur intégrale d'intervalle n'excède pas la valeur seuil de détermination de continuation ; et

un dispositif de génération de signal de commande (34) qui génère un signal de commande lequel ordonne l'activation d'un appareil de protection d'occupant lorsque la valeur de détermination de continuation de collision est dans un état MARCHE et qu'il est déterminé par le second dispositif de détermination de collision (25) que la seconde vitesse de changement de mouvement excède la seconde valeur seuil de détermination de collision.

2. Appareil de détermination de collision destiné à un véhicule, comportant :

un premier dispositif de mesure d'accélération (12) et un second dispositif de mesure d'accélération (21), **caractérisé en ce que** ledit premier dispositif de mesure d'accélération (12) mesure l'accélération agissant sur une partie périphérique externe d'un véhicule, et ledit second dispositif de mesure d'accélération (21) mesure l'accélération agissant sur une position au-delà d'un côté de partie plus interne d'un véhicule que le premier dispositif de mesure d'accélération (12) ; et **en ce qu'**il comporte en outre :

un premier dispositif de calcul de vitesse de changement de mouvement (26) qui calcule une première vitesse de changement de mouvement sur la base d'une accélération qui est mesurée par le premier dispositif de mesure d'accélération (12) ;

un dispositif de calcul de valeur intégrale d'intervalle (29) qui calcule une valeur intégrale d'intervalle sur un intervalle de temps prédéterminé pour l'accélération qui est mesurée par le premier dispositif de mesure d'accélération (12) ;

un second dispositif de calcul de vitesse de changement de mouvement (23) qui calcule une seconde vitesse de changement de mouvement sur la base d'une accélération qui est mesurée par le second dispositif de mesure d'accélération (21) ;

un premier dispositif de détermination de collision (28) qui détermine si oui ou non la première vitesse de changement de mouvement qui est calculée par le premier dispositif de calcul de vitesse de changement de mouvement (26) excède une première valeur seuil de détermination de collision prédéterminée ;

un dispositif de détermination de continuation (31) qui détermine si oui ou non une valeur intégrale d'intervalle qui est calculée par le dispositif de calcul de valeur intégrale d'intervalle (29) excède une valeur seuil de détermination de continuation côté haut prédéterminée ou une valeur seuil de détermination de continuation côté bas prédéterminée ;

un second dispositif de détermination de collision (25) qui détermine si oui ou non la seconde vitesse de changement de mouvement qui est calculée par le second dispositif de calcul de vitesse de changement de mouvement (23) excède une seconde valeur seuil de détermination de collision prédéterminée ;

un dispositif de continuation de détermination de collision (32) qui établit une valeur de détermination de continuation de collision qui indique qu'une collision est dans un état de continuation à un état MARCHE lorsqu'il est déterminé par le premier dispositif de détermination de collision (28) que la première vitesse de changement de mouvement excède la première valeur seuil de détermination de collision et qu'il est également déterminé par le dispositif de détermination de continuation (31) que la valeur intégrale d'intervalle excède la valeur seuil de détermination de continuation côté haut, et qui établit la valeur de détermination de continuation de collision à un état ARRÊT lorsqu'il est déterminé par le dispositif de détermination de continuation (31) que la valeur intégrale d'intervalle est inférieure à la valeur seuil de détermination de continuation côté bas prédéterminée ; et

un dispositif de génération de signal de commande (34) qui génère un signal de commande lequel ordonne l'activation d'un appareil de protection d'occupant lorsque la valeur de détermination de continuation de collision est dans un état MARCHE et qu'il est déterminé par le second dispositif de détermination de collision (25) que la seconde vitesse de changement de mouvement excède la seconde valeur seuil de détermination de collision.

# FIG. 1

# FIG. 2

EP 1 640 220 B1

# FIG. 3

```
                    ( START PROCESSING )

        CALCULATE △Vsis                        ～S01
   (CALCULATE SIS SPEED CHANGE COMPONENT)

        CALCULATE △Vhold                       ～S02
   (CALCULATE SIS SPEED CHANGE COMPONENT)

        CALCULATE △Vecu                        ～S03
   (CALCULATE ECU SPEED CHANGE COMPONENT)

                                    S04                              S10
        IS △Vsis≧△Vsis        NO                     hold=1?              NO
        THRESHOLD VALUE?

              YES  S05              S06              YES   S11             S12
        IS △Vhold≧△Vhold      NO    hold←0      IS △Vhold≧△Vhold    NO    hold←0
        THRESHOLD VALUE?                         THRESHOLD VALUE
                                                         ?
              YES  S07                                  YES
            hold←1

                                    S08
        IS △Vecu≧△Vecu        NO
        THRESHOLD VALUE?

              YES  S09
   OUTPUT REQUEST TO IGNITE AIRBAG

                ( END PROCESSING )
```

EP 1 640 220 B1

# FIG. 4

# FIG. 5

ΔVsis

# FIG. 6

ΔVew

# FIG. 7

START PROCESSING

CALCULATE ΔVsis
(CALCULATE SIS SPEED CHANGE COMPONENT) — S01

CALCULATE ΔVhold
(CALCULATE SIS SPEED CHANGE COMPONENT) — S02

CALCULATE ΔVecu
(CALCULATE ECU SPEED CHANGE COMPONENT) — S03

S04 — IS ΔVsis ≧ ΔVsis THRESHOLD VALUE?  NO

YES

S21 — IS ΔVhold ≧ ΔVhold(HI) THRESHOLD VALUE ?  NO

YES

S07 — hold←1

S08 — IS ΔVecu ≧ ΔVecu THRESHOLD VALUE?  NO

YES — S09

OUTPUT REQUEST TO IGNITE AIRBAG

END PROCESSING

S10 — hold=1?  NO

YES

S24 — IS ΔVhold ≧ ΔVhold(Low) THRESHOLD VALUE ?  NO — S12 hold←0

YES

S22 — hold=1?  NO

YES

S23 — IS ΔVhold ≧ ΔVhold(Low) THRESHOLD VALUE ?  NO — S06 hold←0

YES

EP 1 640 220 B1

# FIG. 8

HIGH SIDE △Vhold
(HI) THRESHOLD VALUE

INTEGRATION INTERVAL : 18ms

△Vhold

CORNERING

HAMMERING

△V (km/h)

t(ms)

t11

t12

LOW SIDE △Vhold
(Low) THRESHOLD VALUE

COLLISION DETERMINATION LATCH TIME

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004277697 A
- JP 2001277994 A
- EP 0430813 A
- DE 19817780 A